# EUROPÄISCHE PATENTSCHRIFT

(11) **EP 1 518 660 B1**
(45) Veröffentlichungstag und Bekanntmachung des Hinweises auf die Patenterteilung: **19.04.2006**
(21) Anmeldenummer: 04020977.7
(22) Anmeldetag: 03.09.2004
(51) Int. Cl.: B29C 51/44, B29C 63/02

(54) **Verfahren und Vorrichtung zur Beschichtung von Bauteilen**
Method and device for coating components
Procédé et dispositif pour appliquer un revêtement sur des pièces

(30) Priorität: 23.09.2003 DE 10344383
(43) Veröffentlichungstag der Anmeldung: 30.03.2005
(73) Patentinhaber: Robert Bürkle GmbH, 72250 Freudenstadt (DE)
(72) Erfinder: Huber, Reinhard, 72250 Freudenstadt-Dietersweiler (DE)
(74) Vertreter: Brommer, Hans Joachim

(56) Entgegenhaltungen:
- EP-A- 0 835 739
- EP-A- 1 228 852

## Beschreibung

Die Erfindung betrifft ein Verfahren und eine Vorrichtung zur vozugsweise dreidimensionalen Beschichtung von Bauteilen, insbesondere Möbelfronten, mit einer Folie, wobei die Bauteile in einer Palette liegen, die nach dem Beschichtungsvorgang in einem Drehwender um etwa 180° gedreht wird, so dass die beschichteten und über ihre gemeinsame Folie zusammenhängenden Bauteile aus der Palette herausfallen und vereinzelt werden können.

Die Beschichtung erfolgt üblicherweise in einer Presse, wo die Bauteile - gegebenenfalls mit einem Klebstoff vorbehandelt - unter Einwirkung von Druck und Wärme mit der Folie verbunden werden. Damit mehrere Werkstücke gleichzeitig zur Presse transportiert, dort beschichtet und anschließend herausgefahren werden können, liegen die Werkstücke in einer gemeinsamen Palette. Aus dieser Palette müssen sie nach dem Beschichtungsvorgang nicht nur entnommen, sondern vor allem auch aus der sie verbindenden gemeinsamen Folie herausgeschnitten werden.

Zum Herausschneiden der beschichteten Bauteile fährt die Palette in einen Drehwender, in dem ein höhenverstellbares Transportband angeordnet ist. Dieses Transportband fährt von oben an die Bauteile heran und verklemmt sie in der Palette. Hierauf erfolgt die Drehung um 180°, so dass die Bauteile anschließend mit ihrer Folie nach unten auf dem Transportband liegen. Das Transportband wird dann abgesenkt, wodurch die zusammenhängenden Bauteile aus der Palette herausfallen. Sie werden dann längs oder quer aus dem Drehwender herausgefahren und auf einem Ausschneidetisch aus der Folie ausgeschnitten.

Sobald die Charge aus der Palette herausgefallen ist, wird die leere Palette wieder zurückgedreht, und zurück in eine Ladestation gefahren, wo sie erneut mit den zu beschichtenden Bauteilen belegt wird. Dazu ist es notwendig, die Palette entweder nach unten abzusenken und sie unter der Presse hindurch zurückzufahren oder sie seitlich um die Presse herumzutransportieren. Man braucht also auf der Eingabeseite der Presse eine Ladestation, auf der Ausgabeseite einen Drehwender und einen Ausschneidetisch. Die gesamte Beschichtungsanlage benötigt daher relativ viel Aufstellungsplatz, auch der apparative Aufwand ist hoch.

Die EP 0 835 739 beschreibt das Wenden eines Bauteils wahrend des Durchlaufs einer Bedruckanlage, um es von beiden Seiten mittels einer Druckeinheit bedruchen zu können.

EP 1 228 852 zeigt einen Wender für ein Tiefziehwerkzeug.

Der vorliegenden Erfindung liegt die Aufgabe zugrunde, das bekannte Beschichtungsverfahren und die zugehörige Vorrichtung in kompakterer Weise als bisher zu realisieren. Zugleich soll sich die Erfindung durch kostengünstigen Aufbau und rationelle Betriebsweise auszeichnen.

Diese Aufgabe wird erfindungsgemäß dadurch gelöst, dass mit einer doppelseitig belegbaren Palette gearbeitet und auf die bisherige Rückdrehung der Palette nach der Bauteil-Entnahme verzichtet wird.

Die beidseitige Belegungsmöglichkeit der Palette sowohl an ihrer Oberseite wie auch an ihrer Unterseite und ihre daraus resultierende beidseitige Prozesstauglichkeit in der Presse ergibt nicht nur eine Verkürzung der Taktzeit, weil die bisher notwendige Rückdrehung der Palette entfällt. Vielmehr bietet die Erfindung auch die Möglichkeit, auf den bisher notwendigen Rücktransport der Palette zur Ladestation zu verzichten und die Palette unmittelbar im Drehwender selbst oder einem daneben angeordneten Legetisch mit neuen Bauteilen zu belegen. Außerdem braucht nur noch mit einer einzigen Palette gearbeitet zu werden, wogegen bisher meist mehrere Paletten im Umlauf waren. Dadurch wird der Betriebsablauf erheblich rationalisiert und gleichzeitig der apparative Aufwand und der hierfür notwendige Platzbedarf reduziert.

Die Vereinzelung der beschichteten Bauteile nach dem Wenden kann außerhalb des Drehwenders erfolgen. Besonders zweckmäßig ist es aber, wenn die Vereinzelung direkt im Drehwender selbst stattfindet, entweder nachdem die Palette in eine das Ausschneiden nicht behindernde Position verfahren worden ist oder nachdem sie neu belegt in die Presse zurückgefahren ist.

Nach dem Wenden können die beschichteten Bauteile wie bisher auf eine absenkbare Unterlage fallen. Erfindungsgemäß bleibt diese Unterlage aber im Drehwender und befördert die Bauteile lediglich in eine für das Ausschneiden der Bauteile günstige Arbeitshöhe, nachdem die leere Palette aus diesem Bereich herausgefahren worden ist.

In Weiterbildung der Erfindung empfiehlt es sich, die Neubelegung einer leeren Palette im Drehwender selbst durchzuführen. Dies kann unmittelbar nach dem Wenden erfolgen, weil die beschichteten Produkte der vorherigen Charge dabei nicht im Wege sind. Dadurch entfallen die bisher notwendigen zusätzlichen Transportvorrichtungen und der entsprechende Zeitaufwand. Es liegt aber auch im Rahmen der Erfindung, die Neubelegung einer leeren Palette in einer seitlichen Legestation durchzuführen.

Zweckmäßig ist die genannte Unterlage derart höhenverstellbar im Drehwender angeordnet, dass sie auch zur Verklemmung der von der Beschichtungspresse kommenden Bauteile vor und während dem Wenden dient.

Die Vorrichtung zur Durchführung des erfindungsgemäßen Verfahrens ist dadurch gekennzeichnet, dass mit einer Palette gearbeitet wird, die sowohl oberseitig wie auch unterseitig mit Bauteilen belegt und abgedichtet werden kann. In Anlehnung an die bisherige Positionierung der Dichtung an der Oberseite empfiehlt es sich, die Palette mit einer zusätzlichen, gleichartigen Dichtung an der Unterseite zu versehen und sie im wesentlichen unten und oben symmetrisch auszubilden, damit beide Seiten gleich gut belegt werden können.

Die genannte Unterlage ist zweckmäßig mit einer Fördervorrichtung kombiniert, die es gestattet, die beschichteten Produkte taktweise nach vorn oder seitlich herauszufahren, so dass sie von der Bedienungsperson nach und nach vom Rand her ausgeschnitten und entnommen werden können.

Die konstruktive Ausbildung der Palette ist praktisch also dadurch gekennzeichnet, dass ihr Rahmen nicht nur wie bisher nach oben, sondern gleichermaßen auch nach unten vorsteht. Daraus resultiert, dass die Beschichtungspresse einen hieran angepassten unteren Presstisch aufzuweisen hat, der im Bereich des Palettenrahmens nach unten abgestuft ist, damit er den die Bauteile tragenden Palettenboden von unten abstützen kann.

Weitere Merkmale und Vorteile der Erfindung ergeben sich aus der nachfolgenden Beschreibung eines Ausführungsbeispieles anhand der Zeichnung und aus der Zeichnung selbst; dabei zeigt
Fig. 1 bis 6 jeweils einen Querschnitt durch den Drehwender in schematischer Darstellung in chronologisch aufeinander folgenden Verfahrensstufen;
Fig. 7 einen teilweisen Querschnitt durch die Prozesskammer der Beschichtungspresse.

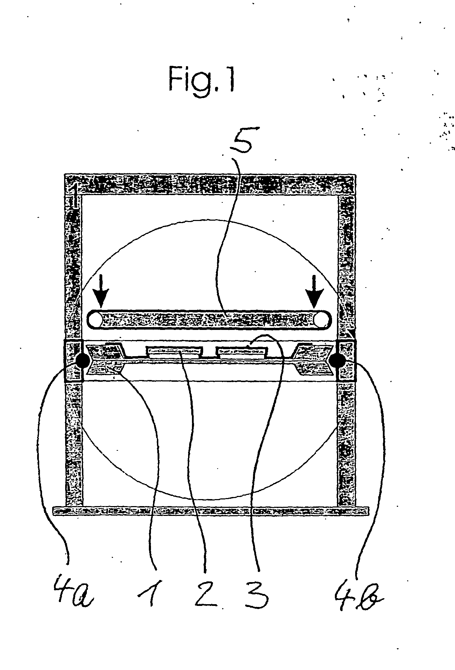

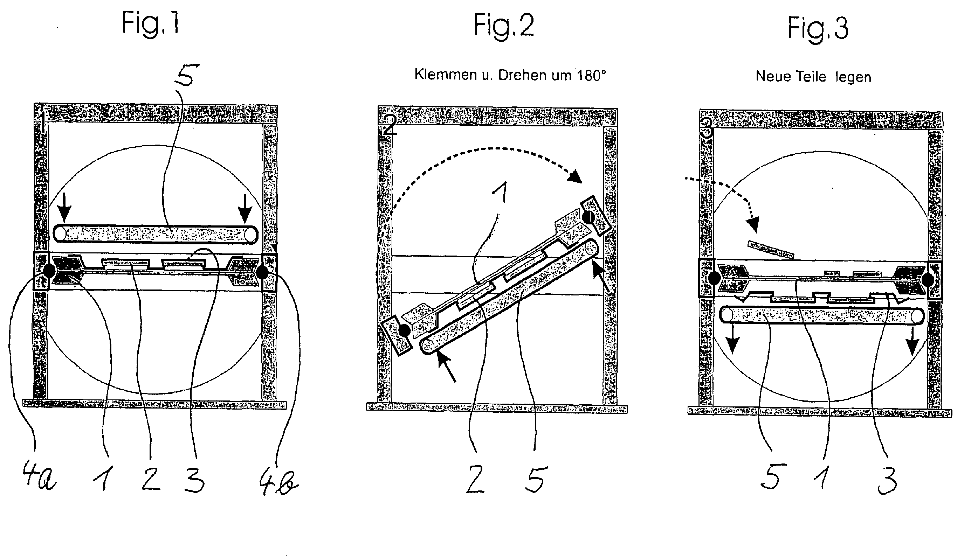

In Fig. 1 erkennt man eine Palette 1, die an ihrer Oberseite mit mehreren beschichteten Bauteilen 2 belegt ist. Die Bauteile 2 liegen über Distanzstücke mit kleinerem Querschnitt auf der Palette, damit die Beschichtungsfolie 3 nicht nur an der Oberseite, sondern auch an den seitlichen Randflächen bis zur Unterkante der Bauteile haftet.

Alternativ zu den genannten Distanzstücken kann ein automatisches Unterstützungssystem, das in die Beschichtungspresse eingebaut ist, verwendet werden.

Seitlich ist die Palette 1 an Führungsschienen 4a und 4b horizontal verfahrbar gelagert, damit sie in den Drehwender hinein- bzw. herausgefahren werden kann. Die Führungsschienen 4a und 4b sind um eine gemeinsame, horizontale Zentralachse verschwenkbar im Drehwender gelagert, so dass die Palette 1 aus der in Fig. 1 gezeichneten Stellung um 180° in die Position gemäß Fig. 3 gewendet werden kann.

Außerdem ist in dem Drehwender eine Platte 5 parallel zur Palette 1 angeordnet. Diese Platte 5 ist höhenverstellbar im Drehwender gelagert und kann zugleich die genannte Drehbewegung der Palette 1 mitmachen.

Der Verfahrensablauf ist folgender:

Die Palette 1 mit den frisch beschichteten Bauteilen 2 wird von der Presse kommend in den Drehwender eingefahren. Die Platte 5 befindet sich dabei in einer Position beabstandet oberhalb der Palette 1. Dieser Zustand ist in Fig. 1 dargestellt.

Sodann fährt die Platte 5 nach unten, bis sie an der Oberseite der Palette 1 und/oder ihrer beschichteten Bauteile 2 anliegt. Hierauf beginnt der Drehvorgang, wie er in Fig. 2 nach einem Drehwinkel von etwa 150° gezeigt ist. Gegen Ende dieses Drehvorganges fallen die Werkstücke 2 mit ihrer gemeinsamen Folie 3 aus der Palette 1 heraus und liegen dann auf der Platte 5, die nun nicht mehr als Abdeckung, sondern als Unterlage fungiert.

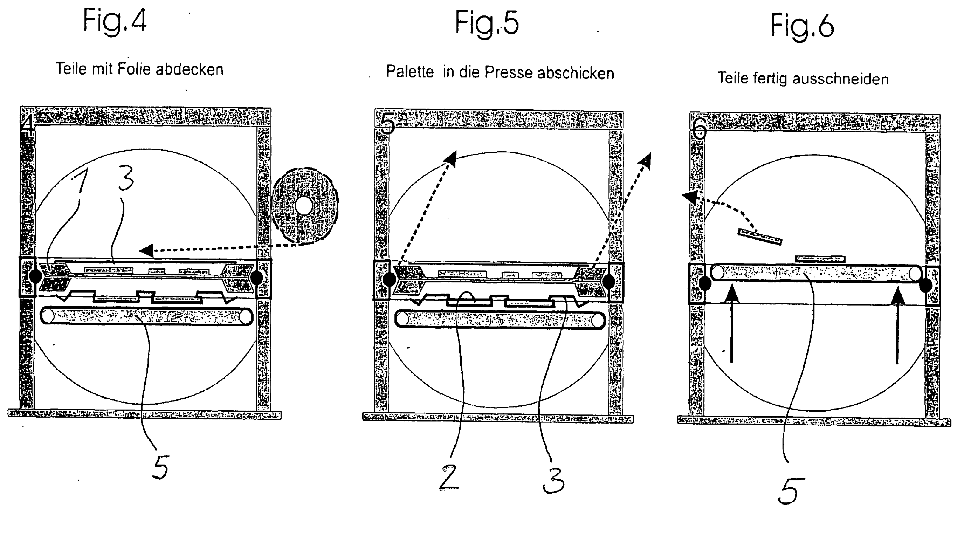

Ist der Drehvorgang beendet, so wird die Platte 5 mit den von ihr getragenen Bauteilen 2 abgesenkt und die nun wieder horizontal liegende Palette 1 an ihrer Oberseite mit neuen, beleimten Bauteilen 2 und Folie 3 neu belegt. Diesen Zustand erkennt man in den Fig. 3 und 4.

Ist die Palette fertig belegt, so fährt sie zurück in die nicht dargestellte Beschichtungspresse und in den frei gewordenen Raum des Drehwenders fährt die Platte 5 mit den beschichteten Bauteilen 2 nach oben, vgl. Fig. 5 und 6. Die Bauteile, die an ihrer Unterseite und den Seitenrändern mit der Folie 3 verklebt sind, können nun problemlos aus der Folie ausgeschnitten und entnommen werden. Zur gleichen Zeit findet in der Presse die Beschichtung der nächsten Charge statt.

Das Ausschneiden der beschichteten Bauteile beginnt am Rand, in Figur 6 am linken Rand der Platte 5. Man sieht, dass die Platte 5 hierzu mit einem Förderband 6 bestückt ist, das die Produkte taktweise nach links verfährt, so dass sie dort bequem am Rand der Platte 5 ausgeschnitten und vereinzelt werden können. Ist die randseitige Produktreihe entnommen, so stellt die Bedienungsperson das Förderband 6 wieder an, um die nächste Produktreihe an den Rand zu verfahren.

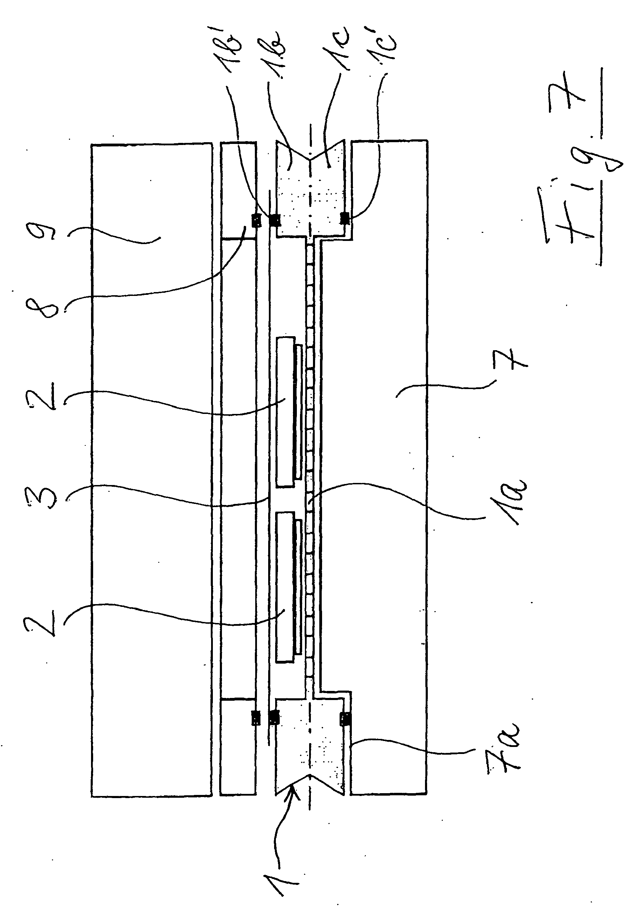

Figur 7 zeigt die erfindungsgemäße Palette in der Prozesskammer der Beschichtungspresse. Sie besteht wie bisher aus einem gelochten Palettenboden 1a und einem umlaufenden oberen Rahmen 1b, ist erfindungsgemäß aber mit einem gleichartigen unteren Rahmen 1c versehen. Beide Rahmen tragen an ihrer dem Palettenboden 1a abgewandten Seite eine umlaufende Dichtung 1b' bzw. 1c'. Dadurch weist die Palette oben und unten funktionsfähige Belegungsfelder auf und ist beidseitig prozesstauglich.

Außerdem sieht man in Figur 7, dass der die Palette tragende untere Presstisch 7 eine an den Palettenquerschnitt angepasste Kontur aufweist, nämlich eine randseitige Abstufung 7a zur Aufnahme des unteren Palettenrahmens 1c. Der zentrale Teil des unteren Presstisches 7 steht demgegenüber nach oben vor und stützt den Palettenboden 1a ab, damit er sich während des Beschichtungsvorganges, insbesondere während der Überdruckbeaufschlagung der Folie 3 nicht nennenswert durchbiegt.

Im Ausführungsbeispiel liegen die zu beschichtenden Bauteile 2 auf Distanzstücken, damit sie nicht nur an der Oberseite, sondern auch an ihren vertikalen Seitenflächen optimal mit der Folie 3 beschichtet werden können. Statt dieser Distanzstücke liegt es aber selbstverständlich auch im Rahmen der Erfindung, in der Palette oder im unteren Presstisch ein PIN-System vorzusehen, um die Bauteile 2 vom Paletten boden 1a abzuheben.

Schließlich zeigt Figur 7 noch den üblichen oberen Dichtrahmen 8, der die Folie 3 gegen den oberen Palettenrahmen 1b drückt und abdichtet sowie die Heizplatte 9, die in dichte Anlage mit der Oberseite des Dichtrahmens 8 verfahren wird. Insoweit entspricht die Prozesskammer dem üblichen Aufbau.

Zusammenfassend zeichnet sich die Erfindung also aufgrund der doppelseitig verwendbaren Palette durch einen wesentlich kostengünstigeren und rationelleren Betriebsablauf aus.

## Patentansprüche

1. Verfahren zur Beschichtung flächiger Bauteile (2), insbesondere Möbelfronten mit einer Folie (3), wobei die Bauteile in einer Palette (1) liegen, die nach dem Beschichtungsvorgang in einem Drehwender um etwa 180° gedreht wird, so dass die beschichteten und über ihre gemeinsame Folie (3) zusammenhängenden Bauteile (2) aus der Palette (1) herausfallen und vereinzelt werden können,
**dadurch gekennzeichnet,**
**dass** mit einer doppelseitig belegbaren Palette (1) gearbeitet wird und auf die bisherige Rückdrehung der Palette nach der Bauteil-Entnahme verzichtet wird.

2. Verfahren nach Anspruch 1,
**dadurch gekennzeichnet,**
**dass** die Neubelegung einer leeren Palette (1) im Drehwender selbst erfolgt.

3. Verfahren nach Anspruch 1,
**dadurch gekennzeichnet,**
**dass** die beschichteten Bauteile (2) im Drehwender nach dem Wenden vereinzelt werden.

4. Verfahren nach Anspruch 1,
**dadurch gekennzeichnet,**
**dass** die beschichteten Bauteile (2) im Drehwender auf eine absenkbare Unterlage (5) fallen und dass diese Unterlage nach dem Herausfahren der neu belegten Palette (1) wieder hochfährt, worauf die beschichteten Bauteile vereinzelt werden.

5. Verfahren nach Anspruch 4,
**dadurch gekennzeichnet,**
**dass** die Unterlage (5) derart höhenverfahrbar ist, dass sie auch zur Abdeckung der neu beschichteten Bauteile vor und während dem Wenden dient.

6. Verfahren nach Anspruch 4,
**dadurch gekennzeichnet,**
**dass** die Unterlage (5) eine Fördervorrichtung aufweist.

7. Vorrichtung zur Beschichtung von Bauteilen (2), wobei die Bauteile in einer Palette (1) liegen, die nach dem Beschichtungsvorgang in einem Drehwender verdrehbar gelagert ist, so dass die beschichteten und über ihre gemeinsame Folie (3) zusammenhängenden Bauteile aus der Palette (1) herausfallen und zu vereinzeln sind, insbesondere zur Durchführung des Verfahrens nach den Ansprüchen 1 bis 6,
**dadurch gekennzeichnet;**
**dass** die Palette (1) sowohl oberseitig wie auch unterseitig abgedichtet und auf beiden Seiten mit Bauteilen (2) belegbar ist .

8. Vorrichtung nach Anspruch 6,
**dadurch gekennzeichnet,**
**dass** die Palette (1) jeweils oben und unten Dichtflächen aufweist.

9. Vorrichtung nach Anspruch 6 oder 7,
**dadurch gekennzeichnet,**
**dass** die Palette (1) oben und unten im Wesentlichen symmetrisch aufgebaut ist.

10. Vorrichtung nach Anspruch 7,
**dadurch gekennzeichnet,**
**dass** die Beschichtungspresse einen zur Palettenaufnahme abgestuften unteren Presstisch (7) aufweist.

11. Vorrichtung nach Anspruch 1,
**dadurch gekennzeichnet,**
**dass** die Palette (1) oben und unten mit einem manuellen Auflagesystem für die zu beschichtenden Bauteile ausgerüstet ist.

## Claims

1. Method of coating planar components (2), especially furniture fronts with a foil (3), the components lying in a pallet (1) which, after the coating operation, is turned through approximately 180° in a rotary turning device, so that the coated components (2), which are joined together by means of their common foil (3), fall out of the pallet (1) and can be separated,
**characterised in that**
the operation is carried out with a pallet (1) that can be loaded on both sides and the pallet is not, as hitherto, turned back over after removal of the components.

2. Method according to claim 1,
**characterised in that**
the reloading of an empty pallet (1) takes place in the rotary turning device itself.

3. Method according to claim 1,
**characterised in that**
the coated components (2) are separated in the rotary turning device after the turning operation.

4. Method according to claim 1,
**characterised in that**
the coated components (2) in the rotary turning device fall onto a lowerable support (5); and after the reloaded pallet (1) has travelled out the support is raised again, whereupon the coated components are separated.

5. Method according to claim 4,
**characterised in that**
the support (5) can be moved vertically in such a manner that it serves also to cover the newly coated components before and during the turning operation.

6. Method according to claim 4,
**characterised in that**
the support (5) has a conveyor device.

7. Apparatus for coating components (2), the components lying in a pallet (1) which, after the coating operation, is rotatably mounted in a rotary turning device, so that the coated components, which are joined together by means of their common foil (3), fall out of the pallet (1) and can be separated, especially for carrying out the method according to claims 1 to 6,
**characterised in that**
the pallet (1) is sealed both on the upper side and on the lower side and can be loaded with components (2) on both sides.

8. Apparatus according to claim 6,
**characterised in that**
the pallet (1) has sealing faces at the top and at the bottom.

9. Apparatus according to claim 6 or 7,
**characterised in that**
the pallet (1) is of substantially symmetrical structure at the top and at the bottom.

10. Apparatus according to claim 7,
**characterised** that
the coating press has a lower press table (7) which is stepped for accommodating the pallets.

11. Apparatus according to claim 1,
**characterised in that**
the pallet (1) is equipped at the top and at the bottom with a manual deposition system for the components to be coated.

## Revendications

1. Procédé pour appliquer un revêtement sur des pièces planes (2), notamment une feuille (3) sur des façades de meubles, lesdites pièces reposant dans une palette (1) qui, à l'issue de l'application du revêtement, est tournée de 180° environ dans un retourneur, de sorte que les pièces (2), qui sont attachées les unes autres par leur feuille commune (3), tombent de la palette (1) et peuvent être détachées les unes des autres, **caractérisé en ce que** l'on utilise une palette (1) pouvant être garnie des deux côtés et que l'on supprime la rotation en sens inverse de la palette après le retrait de pièces qui avait lieu jusqu'à présent.

2. Procédé selon la revendication 1, **caractérisé en ce qu'**une palette (1) vide est regarnie directement dans le dispositif de retournement.

3. Procédé selon la revendication 1, **caractérisé en ce que** les pièces revêtues (2) sont détachées les unes des autres dans le retoumeur après leur retournement.

4. Procédé selon la revendication 1, **caractérisé en ce que** les pièces revêtues (2) tombent dans le retourneur sur un support (5) pouvant être abaissé, et **en ce que** ledit support, sur lequel les pièces revêtues sont détachées les unes des autres, remonte après la sortie de la palette (1) nouvellement garnie.

5. Procédé selon la revendication 4, **caractérisé en ce que** le support (5) peut se déplacer en hauteur de telle manière qu'il sert aussi à recouvrir les pièces nouvellement revêtues avant et pendant le retournement.

6. Procédé selon la revendication 4, **caractérisé en ce que** le support (5) présente un dispositif de transport.

7. Dispositif pour appliquer un revêtement sur des pièces (2), les pièces étant posées dans une palette (1) qui, à l'issue de l'application du revêtement, est montée de façon rotative dans un retourneur, de telle sorte que les pièces revêtues qui sont attachées les unes autres par leur feuille commune (3) tombent de la palette (1) et sont à détacher les unes des autres, notamment pour mettre en oeuvre le procédé selon les revendications 1 à 6, **caractérisé en ce que** la palette (1) est étanchée tant sur le dessus que sur le dessous et qu'elle peut être garnie de pièces (2) des deux côtés.

8. Dispositif selon la revendication 6, **caractérisé en ce que** la palette (1) présente en haut et en bas des surfaces d'étanchéité.

9. Dispositif selon la revendication 6 ou 7, **caractérisé en ce que** la palette (7) est construite de façon essentiellement symétrique en haut et en bas.

10. Dispositif selon la revendication 7, **caractérisé en ce que** la presse destinée à appliquer le revêtement présente une table inférieure (7) qui est étagée afin de recevoir la palette.

11. Dispositif selon la revendication 7, **caractérisé en ce que** la palette (1) est équipée en haut et en bas d'un système de support manuel pour les pièces à revêtir.
